# EUROPEAN PATENT APPLICATION

(11) **EP 4 806 540 A1**
(43) Date of publication of application: **16.09.2026**
(21) Application number: 26159877.5
(22) Date of filing: 20.02.2026
(51) Int. Cl.: B01D 53/86, B22F 3/00, B22F 5/00, B29C 64/00, B64D 13/00, B64D 13/06

(54) **OZONE CONVERTERS AND METHODS OF PRODUCING THE SAME BY ADDITIVE MANUFATURING**

(30) Priority: 13.03.2025 US 202519078466
(71) Applicant: Honeywell International Inc., Charlotte, NC 28202 (US)
(72) Inventor: ESTRADA GUERRERO, Edgar Felipe, Charlotte, 28202 (US); CHIANG PUJOL, Cesar Alejandro, Charlotte, 28202 (US)
(74) Representative: Ingrassia, Fisher & Lorenz UK Ltd.

(57) **Abstract**

Ozone converters (100) for an aircraft and methods of producing the same are provided. The ozone converters (100) include a header assembly (110) configured to receive a gas in an inlet (112) thereof and expel the gas at an outlet (114) thereof, and a core disposed therein. The core includes a network structure having passage walls that define passages configured to receive the gas. A catalyst material is disposed on surfaces of the passage walls configured to react to reduce a concentration of ozone in the gas. The core is produced by an additive manufacturing process that deposits a material layer-by-layer to form the passage walls have a three-dimensional (3D) self-supporting geometry. The passage walls include concentric primary walls disposed about a common central axis of the core. Adjacent pairs of the primary walls define a fluid domain therebetween. The primary walls have varying diameters between ends of the network structure.

## Description

### TECHNICAL FIELD

The present invention generally relates to ozone converters for aircraft, and more particularly relates to ozone converters that include a catalytic core produced by an additive manufacturing process.

### BACKGROUND

Ozone converters for aircraft are systems designed to manage and reduce ozone (O₃) levels in the cabin air and other enclosed environments of an aircraft. Aircraft, especially those flying at high altitudes, may encounter increased levels of ozone, particularly when traveling through the ozone-rich regions of the stratosphere. Ozone converters chemically convert ozone into oxygen (O₂), thereby reducing its concentration in the cabin. These systems are beneficial for promoting the health and comfort of passengers and crew during long flights.

Despite the benefits of existing ozone converters, there is an ongoing desire to improve performance thereof and to reduce manufacturing complexity thereof. Furthermore, other desirable features and characteristics of the present invention will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In various examples, an ozone converter is provided for an aircraft. In one example, the ozone converter includes a header assembly configured to receive a gas in an inlet thereof and expel the gas at an outlet thereof, and one or more cores disposed within the header assembly. The core(s) each include a network structure having a plurality of passage walls that define passages therebetween. The core(s) are configured to receive the gas within the passages thereof. A catalyst material is disposed on surfaces of the passage walls that is configured to chemically react with the gas and thereby reduce a concentration of ozone in the gas as the gas passes through the passages. The core(s) are produced by an additive manufacturing process that deposits a material layer-by-layer to form the passage walls have a three-dimensional (3D) self-supporting geometry. The passage walls of the network structure include concentric primary walls disposed about a common central axis of the one or more cores. Adjacent pairs of the primary walls define a fluid domain therebetween. The primary walls have varying diameters between ends of the network structure.

In various examples, method is provided for producing an ozone converter an aircraft. In one example, the method includes performing an additive manufacturing process to produce a network structure of a core of the ozone converter. The additive manufacturing process includes depositing a material layer-by-layer to form the network structure that has a three-dimensional (3D) self-supporting geometry. The network structure includes a plurality of passage walls that define passages therebetween. The passage walls of the network structure include concentric primary walls disposed about a common central axis of the network structure. Adjacent pairs of the primary walls define a fluid domain therebetween. The primary walls have varying diameters between ends of the network structure. The method includes covering the passage walls of the network structure with a slurry to form a washcoat thereon, and impregnating the washcoat with a catalyst material to define the core of the ozone converter. The catalyst material is configured to react with ozone to form oxygen. The ozone converter includes a header assembly configured to receive a gas in an inlet thereof and expel the gas at an outlet thereof, and the core is disposed within the header assembly.

In various examples, an ozone converter is provided for an aircraft. In one example, a header assembly configured to receive a gas in an inlet thereof and expel the gas at an outlet thereof, and a single monolithic core disposed within the header assembly. The core includes a network structure having a plurality of passage walls that define passages therebetween. The core is configured to receive the gas within the passages thereof. A catalyst material disposed on surfaces of the passage walls is configured to chemically react with the gas and thereby reduce a concentration of ozone in the gas as the gas passes through the passages. The core is produced by an additive manufacturing process that deposits a material layer-by-layer to form the passage walls have a three-dimensional (3D) self-supporting geometry. The passage walls of the network structure include concentric primary walls disposed about a common central axis of the core. Adjacent pairs of the primary walls define a fluid domain therebetween. The primary walls have varying diameters between ends of the network structure. The diameters of the primary walls are defined by limits of corresponding diametric functions. The passage walls of the network structure include secondary walls extending between the adjacent pairs of the primary walls to subdivide the fluid domain therebetween and thereby define fluid passages. The secondary walls vary in spacing and orientation relative to each other within the corresponding fluid domain and/or between fluid domains. Each of the secondary walls has varying radial positions between the ends of the network structure that are defined by corresponding radial functions.

Furthermore, other desirable features and characteristics of the ozone converters and methods will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 represents an ozone converter in accordance with an embodiment;
FIG. 2 is an exploded view of the ozone converter of FIG. 1 illustrating various components thereof in accordance with an embodiment;
FIGS. 3-5 include cross-sectional views of certain components of the ozone converter of FIG. 1 in accordance with certain embodiments;
FIG. 6 is a top view representing aspects of a core of an ozone converter produced with additive manufacturing techniques in accordance with an embodiment;
FIG. 7 is a cross-sectional view of the core of FIG. 6 along a line A-A illustrating primary walls having varying diameters in accordance with an embodiment;
FIG. 8 is a side view of the core of FIG. 6 along a line B-B illustrating secondary walls having varying radial positions in accordance with an embodiment;
FIG. 9 includes enlarged, isolated views of a fluid passage of the core of FIG. 6 in accordance with an embodiment;
FIG. 10 is a flowchart illustrating an exemplary method for producing an ozone converter in accordance with an embodiment;
FIG. 11 schematically represents an additive manufacturing system in accordance with an embodiment; and
FIG. 12 schematically represents a cross-section of a surface of a passage wall of a core within an ozone converter in accordance with an embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Systems and methods disclosed herein provide for ozone converters, such as those used for a mobile platform. In general, the ozone converters are configured to chemically convert ozone into oxygen (O₂), thereby reducing its concentration in an enclosed space. The ozone converters may promote health and comfort of individuals within the enclosed space, such as passengers within a cabin of a mobile platform.

The mobile platform may be any type of vehicle, such as but not limited to various types of aircraft. Examples of aircraft may include, but are not limited to, fixed-wing aerial vehicles (e.g., propeller-powered or jet powered), rotary-wing aerial vehicles (e.g., helicopters), etc. For convenience, the systems and methods will be described in reference to a manned airplane; however, as noted the systems and methods are not limited to such application.

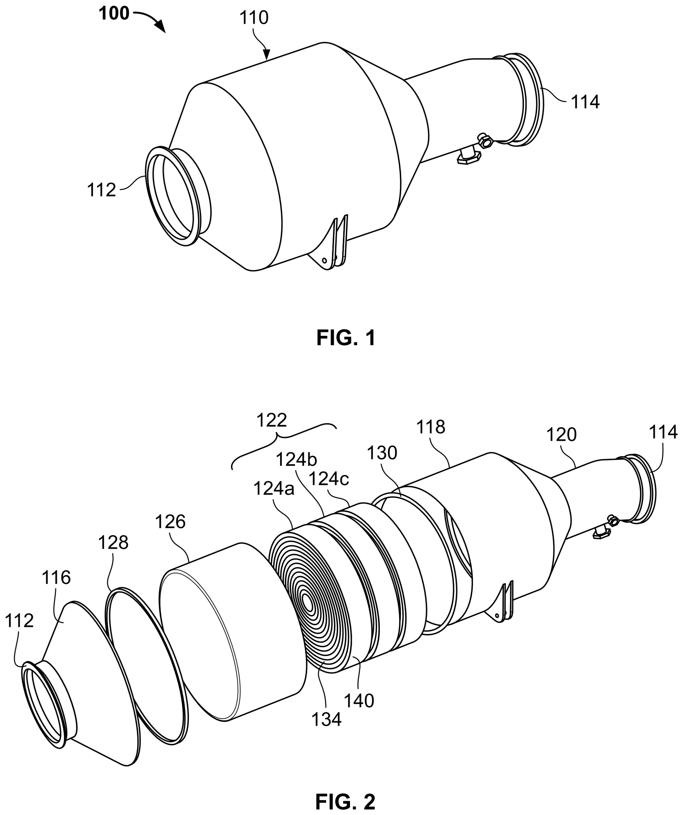

FIGS. 1 and 2 represent aspects of an exemplary ozone converter 100 in accordance with certain embodiments. The ozone converter 100 includes a housing or header assembly 110 having an inlet 112 and an outlet 114. The ozone converter 100 is configured to receive a gas in the inlet 112 thereof having a first concentration of ozone and expel the gas at the outlet 114 thereof having a second concentration that is less than the first concentration. More specifically, the ozone converter 100 includes a core disposed within the header assembly 110 that are configured to cause a chemical reaction with the gas and thereby reduce the concentration of ozone in the gas as the gas passes through the ozone converter 100.

In the example of FIG. 2, the header assembly 110 includes an inlet header 116, a center header 118, and an outlet header 120 that, in combination, define a compartment extending from the inlet 112 to the outlet 114. Within the compartment, the ozone converter 100 includes a core 122 that, in this example, includes an assembly of three sub-cores 124a, 124b, and 124c. Notably, the ozone converter 100 may include fewer or more sub-cores. Radially outer sides of the core 122 are encased within a seal gasket 126, and edges of ends of the core 122 are secured within the header assembly 110 by retainer rings 128, 130.

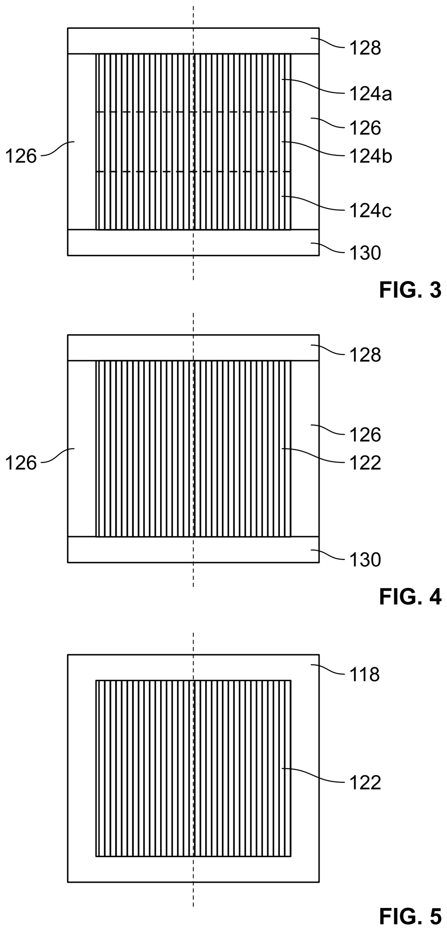

FIGS. 3-5 represent cross-sectional views of nonlimiting examples of certain assembled internal components of the ozone converter 100. In FIG. 3, the ozone converter 100 includes the three sub-cores 124a ,124_{b}, 124c assembled with the seal gasket 126 and the retainer rings 128, 130. In FIG. 4, the ozone converter 100 includes a single core 122 disposed with the seal gasket 126 and the retainer rings 128, 130. In FIG. 5, the ozone converter 100 includes the single core 122 produced with an integral center header 118, and therefore does not require the seal gasket 126 or the retainer rings 128, 130.

Various existing cores for ozone converters are produced by complex assembly methods that may include assembling and welding multiple layers of fins and braze sheets about a center tube. Such cores and the methods of production thereof are typically associated with significant production times and costs, and may be limited in the types of flow paths that may be produced for the passages. Notably, the cores disclosed herein, including the sub-cores 124a, 124b, 124c of the core 122 of the ozone converter 100, are produced using additive manufacturing processes.

As used herein, the term additive manufacturing (AM) refers to any process wherein thin successive layers of material are laid down atop one another and joined to form an article, as opposed to subtractive manufacturing methodologies, such as traditional machining and casting. AM processes can be used to produce articles of manufacture having complex geometries in a single operation with no tooling. Various AM processes may be used to produce the cores of the ozone converters herein including, but not limited to, laser powder bed fusion and filament fusion.

The core 122 includes a network structure having a plurality of passage walls that define passages therebetween. In some examples, the network structure may include a radially outer wall for structural support and/or to provide a smooth exterior surface. The passages of the ozone converter 100 are configured to receive the gas from the inlet 112, direct the gas through a flow path defined thereby, and expel the gas to be directed to the outlet 114. The passages, as defined by the passage walls, may have various shapes and flow paths.

A catalyst material is disposed on surfaces of the passages that is configured to chemically react with the gas and thereby reduce a concentration of ozone in the gas as the gas passes through the passages. The reduction in the concentration of ozone in the gas may be dependent, at least in part, on the particular catalyst material and the surface area in contact with the gas as the gas passes through the network structure. Various materials or compositions may be used as the catalyst material, and the ozone converter 100 is not limited to any particular catalyst material. The surface area of the passages may depend on the structure of the passages (as defined by the passage walls) and the flow path thereof. For example, a more tortuous flow path may provide an increased surface area but may also provide a reduce flow rate of the gas through the ozone converter 100.

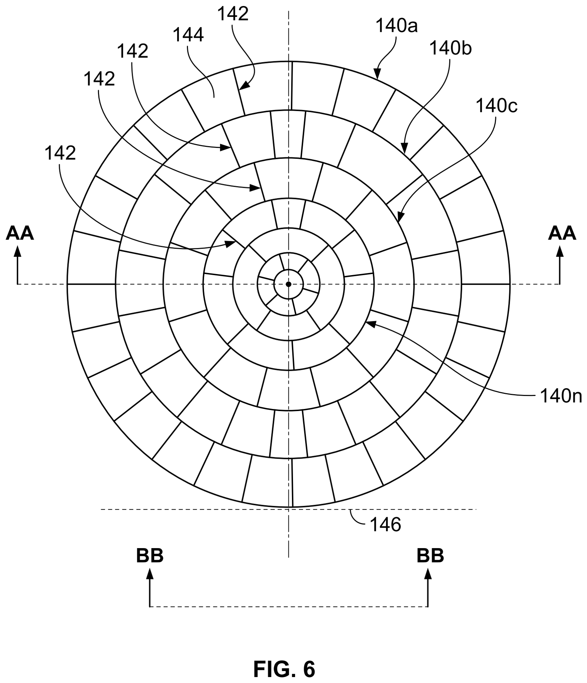

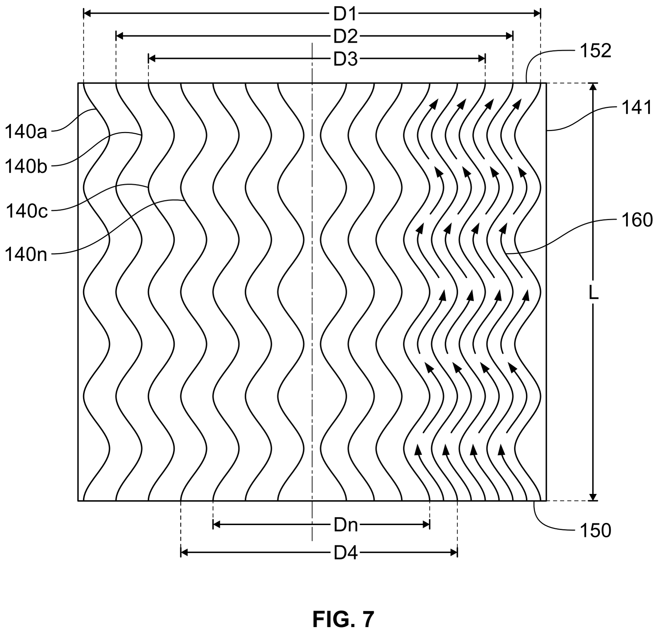

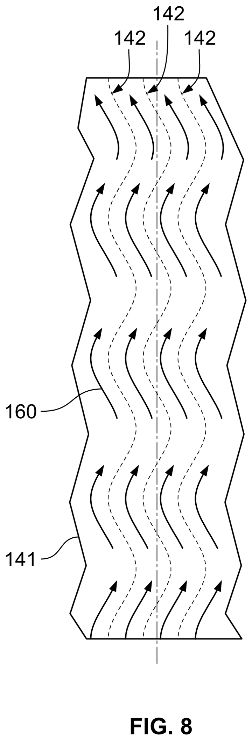

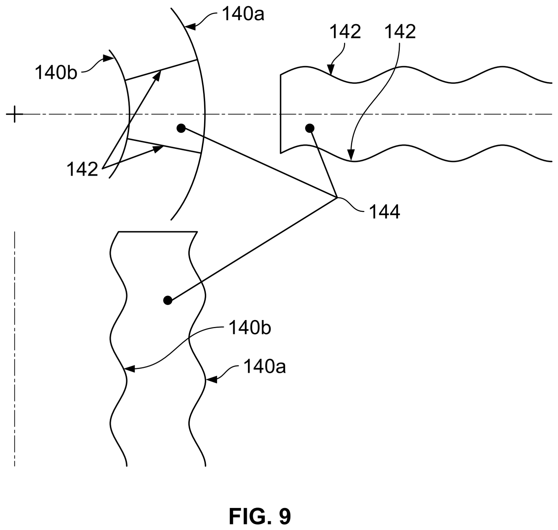

Referring now to FIGS. 6-9, a nonlimiting example of the core 122 is provided in accordance with certain embodiments. The core 122 may be produced by AM processes and may be a single monolithic core (as represented) or may be an assembly of two or more sub-cores each formed by AM processes. As shown in FIG. 6, the core 122 includes concentric primary walls 140 disposed about a common central axis, including an outer primary wall 140a having a major diameter (D₁ in FIG. 8) and subsequent concentric diametral primary walls 140b, 140c, 140d, 140e, 140f, ...140n having smaller diameters (D₂, D₃, D₄, ...Dₙ in FIG. 7). Each adjacent pair of the primary walls 140 define a fluid domain therebetween. These fluid domains may be further subdivided by secondary walls 142 extending between the adjacent pairs of the primary walls 140 to define fluid passages 144 (FIG. 9). The primary walls 140 may be equally spaced or may be progressively spaced from each other. Likewise, the secondary walls 142 may be equally spaced or may have varying angular spacing and orientation relative to each other within and/or between fluid domains. In some examples, the primary walls 140 are progressively spaced and/or the secondary walls 142 have varying spacing and orientation within and/or between fluid domains to promote uniform flow distribution across the core 122. The core 122 may have various sizes capable of various gas flow throughputs and catalytic conversion efficiencies or ratings. In some examples, the core 122 may have a length (L) of about 0.5 to 40 inches, such as about 0.5 to 10 inches, such as about 10 to 40 inches. In some examples, the core 122 may have a major diameter (D₁) of between about 0.5 to 40 inches, such as about 0.5 to 10 inches, such as about 10 to 40 inches. In some examples, radial dimensions between the fluid domains may be between about 0.050 to 2.0 inches, such as about 0.05 to 0.25 inches, such as about 0.25 to 2.0 inches. In some examples, dimensions between the secondary walls 142 (i.e., angular spacing) may be between about 0.5 to 120 degrees.

FIG. 7 represents a cross-sectional view of the core 122 along the line A-A of FIG. 6, and FIG. 8 represents a side view of the core 122 along the line B-B of FIG. 6. As represented, the primary walls 140 may not be linear between ends of the core 122. Instead, the primary walls 140 may have varying diameters between a first end 150 and a second end 152 of the core 122 to each define a cylinder with wavy or undulating sides (i.e., curves in and out along its length). In some examples, the diameters of the primary walls 140 may be defined by limits of corresponding "diametric functions" (i.e., functions relating to the diameter of the primary walls 140) to form a concentric, wavy structure across the cross-section of the core 122. As used herein, a wavy structure may refer to a structure having a surface having a plurality of peaks and valleys with smooth, gradual, and/or continuous transitions therebetween (e.g., waveform-like). In such examples, the surface of the wavy structure may have uniform or varying amplitudes (i.e., dimensions between the surface and the central axis) and/or wavelengths (i.e., dimensions between adjacent peaks).

The secondary walls 142 may have varying radial positions along between the ends of the network structure 134, that is, the secondary walls 142 may have wavy structures. In some examples, the radial positions of the secondary walls 142 may be defined by corresponding "radial functions" (i.e., functions relating to the radius of the secondary walls 142). In some examples, the radial functions may include a periodic function projected parallel to the center axis of the core 122 and perpendicularly to a tangential line (e.g., line 146) of the primary walls 140. The radial functions may intersect and be delimitated by the diametric functions to form the fluid passages 138 having wavy or, in some examples, periodic features on all four sides thereof. For example, FIG. 9 represents isolated, enlarged views of one of the fluid passages 144 having wavy features on all four sides thereof. As such, the fluid flow (represented by arrows 160) may be continuously redirected along two axes perpendicular to the central axis based on the structures of the primary walls 140 and the secondary walls 142. The diametric functions and/or the radial functions may be configured to promote an increase surface area in contact with the gas and an increase in turbulence of fluid flow through the core 122 which in turn may promote catalytic conversion efficiency. A nonlimiting example of the domain functions and radial functions may be expressed by equation 1 below. $cos A ∗ cos \left(Bx+C\right) + D$ where A is amplitude, B the period variable (P=2π/b), C is equal to a horizontal wave shift, and D is equal to a vertical wave shift.

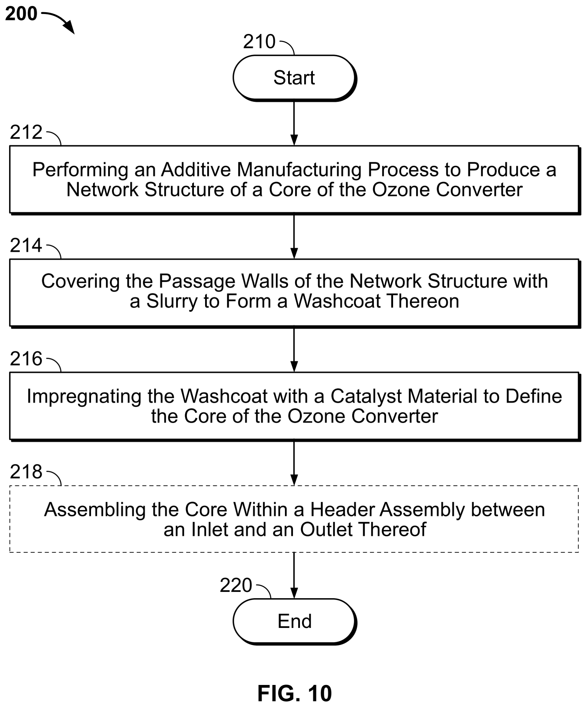

The ozone converters disclosed herein, including the ozone converter 100, provide for methods of producing and using ozone converters for converting ozone to oxygen. For example, FIG. 10 is a flowchart illustrating an exemplary method 200 for producing an ozone converter. The method 200 may start at 210.

At 212, the method 200 may include performing an additive manufacturing process to produce a network structure of a core of the ozone converter. The additive manufacturing process includes depositing a material layer-by-layer to form the network structure which has a three-dimensional (3D) self-supporting geometry. The network structure includes a plurality of passage walls that define passages therebetween. The passage walls of the network structure include concentric primary walls disposed about a common central axis of the network structure. Each adjacent pair of the primary walls define a fluid domain therebetween. The primary walls have varying diameters between ends of the network structure.

In some examples, the additive manufacturing process may include producing a model, such as a design model of the network structure. For example, the model may be designed with computer aided design (CAD) software and may include three-dimensional ("3D") numeric coordinates of the entire configuration of the network structure including both external and internal surfaces. In one exemplary embodiment, the model may include several successive two-dimensional ("2D") cross-sectional slices that together form the 3D component. The network structure may be formed according to the model. In one exemplary embodiment, the entire network structure is formed using a rapid prototyping or additive layer manufacturing process. Some examples of additive layer manufacturing processes include: selective laser sintering in which a laser is used to sinter a powder media in precisely controlled locations; laser wire deposition in which a wire feedstock is melted by a laser and then deposited and solidified in precise locations to build the product; electron beam melting; laser engineered net shaping; and direct metal deposition. Other additive manufacturing processes may also be employed. In general, additive manufacturing techniques provide flexibility in free-form fabrication without geometric constraints, fast material processing time, and innovative joining techniques. In one particular exemplary embodiment, direct metal laser fusion (DMLF) is used to produce the network structure. DMLF is a commercially-available, laser-based rapid prototyping and tooling process by which complex parts may be directly produced by precision melting and solidification of metal powder into successive layers of larger structures, each layer corresponding to a cross-sectional layer of the 3D component. As such, in one exemplary embodiment, the additive manufacturing process is performed with DMLF techniques to form the network structure.

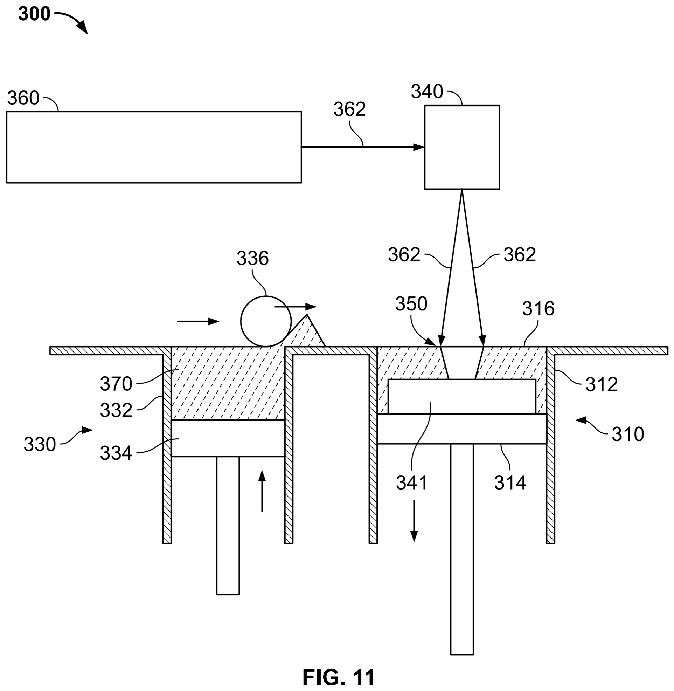

Referring to FIG. 11, a DMLF system 300 is represented for manufacturing the network structure in accordance with an exemplary embodiment. The system 300 includes a fabrication device 310, a powder delivery device 330, a scanner 340, and a laser 360 that function to manufacture an article 350 (e.g., the core or sub-core) with build material 370. The fabrication device 310 includes a build container 312 with a fabrication support 314 on which the article 350 is formed and supported. The fabrication support 314 is movable within the build container 312 in a vertical direction and is adjusted in such a way to define a working plane 316. The delivery device 330 includes a powder chamber 332 with a delivery support 334 that supports the build material 370 and is also movable in the vertical direction. The delivery device 330 further includes a roller or wiper 336 that transfers build material 370 from the delivery device 330 to the fabrication device 310.

During operation, a base block 341 may be installed on the fabrication support 314. The fabrication support 314 is lowered and the delivery support 334 is raised. The roller or wiper 336 scrapes or otherwise pushes a portion of the build material 370 from the delivery device 330 to form the working plane 316 in the fabrication device 310. The laser 360 emits a laser beam 362, which is directed by the scanner 340 onto the build material 370 in the working plane 316 to selectively fuse the build material 370 into a cross-sectional layer of the article 350 according to the design. More specifically, the speed, position, and other operating parameters of the laser beam 362 are controlled to selectively fuse the powder of the build material 370 into larger structures by rapidly melting the powder particles that may melt or diffuse into the solid structure below, and subsequently, cool and re-solidify. As such, based on the control of the laser beam 362, each layer of build material 370 may include unfused and fused build material 370 that respectively corresponds to the cross-sectional passages and walls that form the article 350. In general, the laser beam 362 is relatively low power to selectively fuse the individual layer of build material 370. As an example, the laser beam 362 may have a power of approximately 50 to 500 Watts, although any suitable power may be provided.

Upon completion of a respective layer, the fabrication support 314 is lowered and the delivery support 334 is raised. Typically, the fabrication support 314, and thus the article 350, does not move in a horizontal plane during this step. The roller or wiper 336 again pushes a portion of the build material 370 from the delivery device 330 to form an additional layer of build material 370 on the working plane 316 of the fabrication device 310. The laser beam 362 is movably supported relative to the article 350 and is again controlled to selectively form another cross-sectional layer. As such, the article 350 is positioned in a bed of build material 370 as the successive layers are formed such that the unfused and fused material supports subsequent layers. This process is continued according to the modeled design as successive cross-sectional layers are formed into the completed desired portion (e.g., the core or sub-core).

The delivery of build material 370 and movement of the article 350 in the vertical direction are relatively constant and only the movement of the laser beam 362 is selectively controlled to provide a simpler and more precise implementation. The localized fusing of the build material 370 enables more precise placement of fused material to reduce or eliminate the occurrence of over-deposition of material and excessive energy or heat, which may otherwise result in cracking or distortion. The unused and unfused build material 370 may be reused, thereby further reducing scrap. Any suitable laser and laser parameters may be used, including considerations with respect to power, laser beam spot size, and scanning velocity.

In various examples, the build material 370 may be provided as a metallic alloy in powder form. As used herein, the term "metallic alloy" refers to any alloy wherein a specific or individual metallic material is the single greatest constituent thereof, as measured on a weight percentage basis. For example, an "aluminum alloy" may include the class of alloys where aluminum consists of a majority of the alloy, as measured on a weight percentage basis. Nonlimiting examples of metallic alloys suitable for the build material 370 may include aluminum alloys, titanium alloys, nickel alloys, and iron alloys.

In various examples, the build material 370 may be provided as a ceramic compound in powder form. As used herein, the term "ceramic compound" refers to any material or mixture wherein a specific or individual ceramic material is the single greatest constituent thereof, as measured on a weight percentage basis.

Referring again to FIG. 10, at 214, the method 200 may include covering the passage walls of the network structure with a slurry to form a washcoat thereon. The slurry may include various compositions including, but not limited to, compositions including aluminum oxide, titanium dioxide, and silicon dioxide.

At 216, the method 200 may include impregnating the washcoat with a catalyst material to define the core of the ozone converter. The catalyst material is configured to react with the ozone to form oxygen. The catalyst material may include various compositions including, but not limited to, compositions including platinum, cobalt, nickel, rhodium, and palladium.

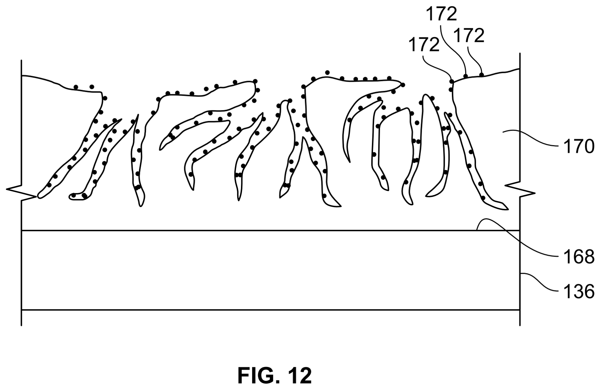

FIG. 12 represents an exemplary cross-sectional view of a surface 168 of passage walls 136 of the core. The surface has a washcoat 170 formed thereon and a catalyst material 172 impregnated therein.

At 218, the method 200 may optionally include assembling the core within a header assembly between an inlet and an outlet thereof.

In some examples, the method 200 may include steps for using the ozone converter including directing a gas into the inlet of the ozone converter, directing the gas into the passages of the one or more cores, reacting the ozone within the gas with the catalyst material to produce oxygen and thereby reduce a concentration of the ozone in the gas as the gas passes through the passages, and directing the gas out of an outlet of the ozone converter.

The method 200 may end at 220.

The systems and methods disclosed herein provide various benefits over certain existing systems and methods. For example, producing the cores described herein with additive manufacturing processes may simplify manufacturing, reduce manufacturing time, reduce a final weight of the core, and/or improve catalytic conversion efficiency of the core.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the term "radial" (and any derivatives) may encompass directional relationships that are other than precisely aligned with (e.g., oblique to) the true radial dimensions, provided the relationship is predominantly in the respective nominal axial or radial direction. As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An ozone converter for an aircraft, comprising:
a header assembly configured to receive a gas in an inlet thereof and expel the gas at an outlet thereof; and
one or more cores disposed within the header assembly, wherein the one or more cores each include a network structure having a plurality of passage walls that define passages therebetween, wherein the one or more cores are configured to receive the gas within the passages thereof, wherein a catalyst material disposed on surfaces of the passage walls is configured to chemically react with the gas and thereby reduce a concentration of ozone in the gas as the gas passes through the passages, wherein the one or more cores are produced by an additive manufacturing process that deposits a material layer-by-layer to form the passage walls have a three-dimensional (3D) self-supporting geometry, wherein the passage walls of the network structure include concentric primary walls disposed about a common central axis of the one or more cores, wherein adjacent pairs of the primary walls define a fluid domain therebetween, wherein the primary walls have varying diameters between ends of the network structure.

2. The ozone converter of claim 1, wherein the primary walls are progressively spaced from each other and configured to promote uniform flow across a cross-section of the network structure.

3. The ozone converter of claim 1, wherein the diameters of the primary walls are defined by limits of corresponding diametric functions.

4. The ozone converter of claim 1, wherein the passage walls of the network structure include secondary walls extending between the adjacent pairs of the primary walls to subdivide the fluid domain therebetween and thereby define fluid passages, wherein the secondary walls vary in spacing and orientation relative to each other within the corresponding fluid domain and/or between fluid domains.

5. The ozone converter of claim 4, wherein each of the secondary walls has varying radial positions between the ends of the network structure that are defined by corresponding radial functions.

6. The ozone converter of claim 1, wherein the ozone converter includes a single monolithic core, wherein the single monolithic core is produced to be integral with a portion of the header assembly, wherein the ozone converter does not include a seal gasket or a metal ring welded to an outer header thereof.

7. The ozone converter of claim 1, wherein the ozone converter includes at least two cores and the at least two cores are assembled in a stack within the header assembly to define a core assembly.

8. A method for producing an ozone converter for an aircraft, comprising:
performing an additive manufacturing process to produce a network structure of a core of the ozone converter, wherein the additive manufacturing process includes depositing a material layer-by-layer to form the network structure that has a three-dimensional (3D) self-supporting geometry, wherein the network structure includes a plurality of passage walls that define passages therebetween, wherein the passage walls of the network structure include concentric primary walls disposed about a common central axis of the network structure, wherein adjacent pairs of the primary walls define a fluid domain therebetween, wherein the primary walls have varying diameters between ends of the network structure;
covering the passage walls of the network structure with a slurry to form a washcoat thereon; and
impregnating the washcoat with a catalyst material to define the core of the ozone converter, wherein the catalyst material is configured to react with ozone to form oxygen,
wherein the ozone converter includes a header assembly configured to receive a gas in an inlet thereof and expel the gas at an outlet thereof, and the core is disposed within the header assembly.

9. The method of claim 11, wherein the primary walls are produced to be progressively spaced from each other and to promote uniform flow across a cross-section of the network structure.

10. The method of claim 11, wherein the diameters of the primary walls are defined by limits of corresponding diametric functions.

11. The method of claim 11, wherein the passage walls of the network structure include secondary walls extending between the adjacent pairs of the primary walls to subdivide the fluid domain therebetween and thereby define fluid passages, wherein the secondary walls vary in spacing and orientation relative to each other within the corresponding fluid domain and/or between fluid domains.

12. The method of claim 11, wherein each of the secondary walls has varying radial positions between the ends of the network structure that are defined by corresponding radial functions.

13. The method of claim 11, wherein the ozone converter includes a single monolithic core.

14. The method of claim 13, wherein the single monolithic core is produced to be integral with a portion of the header assembly, wherein the ozone converter does not include a seal gasket or a metal ring welded to an outer header thereof.

15. The method of claim 11, further comprising:
directing the gas into the inlet of the ozone converter;
directing the gas into the passages of the core;
reacting the ozone within the gas with the catalyst material to produce oxygen and thereby reduce a concentration of the ozone in the gas as the gas passes through the passages; and
directing the gas out of the outlet of the ozone converter.
